# FASCICULE DE BREVET EUROPEEN

(11) **EP 0 849 853 B1**
(45) Date de publication et mention de la délivrance du brevet: **03.04.2002**
(21) Numéro de dépôt: 97420234.3
(22) Date de dépôt: 11.12.1997
(51) Int. Cl.: H02G 3/30

(54) **Console pour conduits porteurs**
Konsole für tragende Kanäle
Bracket for channels

(30) Priorité: 19.12.1996 FR 9616005; 19.12.1996 FR 9616006
(43) Date de publication de la demande: 24.06.1998
(73) Titulaire: METAL DEPLOYE SA, F-21500 Montbard (FR)
(72) Inventeur: Durin, Michel, 78210 Saint Cyr L'Ecole (FR); Boltz, Roland, 60190 Estrees St Denis (FR)
(74) Mandataire: Desolneux, Jean-Paul Charles

(56) Documents cités:
- EP-A- 0 294 273
- WO-A-93/04612
- DE-A- 2 626 735
- DE-U- 8 801 512
- FR-A- 2 697 690
- FR-A- 2 726 697

## Description

La présente invention est relative à une console destinée particulièrement mais non exclusivement au supportage et à la fixation de conduits porteurs de câbles électriques ou de câbles ou conducteurs ou tuyaux souples de toute nature tels que, par exemple, des fibres optiques ou des conduites de fluides.

On sait en effet que, pour installer des câbles électriques utilisés dans les applications les plus diverses ou plus généralement des conduites de fluide ou des conducteurs souples, il est d'usage d'utiliser des conduits porteurs tels que des chemins de câbles ou des échelles de câbles dans lesquels ou sur lesquels sont disposés les câbles ou analogues.

La console selon l'invention est destinée plus particulièrement mais non exclusivement à l'installation de chemins de câbles en treillis de fils et de chemins de câbles en tôles. Un exemple, nullement limitatif, de tels chemins de câbles est donné par le brevet européen EP 0 298 825 pour les chemins de câbles en treillis de fils et par le brevet français FR 1.573.264 pour les chemins de câbles en tôles.

Pour l'installation des chemins de câbles dans les sites où ils doivent être montés, les consoles destinées à leur supportage et à leur fixation sont de façon connue disposées sur les parois, surfaces ou de façon générale structures de support le long desquelles doivent courir les chemins de câbles.

On connaît déjà des consoles pour l'installation de chemins de câbles, généralement réalisées à partir de tôle métallique.

De telles consoles comportent notamment une paroi de pose de forme rectangulaire, destinée à recevoir le chemin de câbles, solidaire par chacun de ses deux grands côtés d'une paroi latérale perpendiculaire à la paroi de pose. Les deux parois latérales ont généralement même dimension et sont disposées symétriquement par rapport à un plan perpendiculaire à la paroi de pose passant par le milieu des petits côtés de cette paroi.

Ces consoles de forme générale en U sont de dimensions telles qu'elles sont aptes à être encastrées par un petit côté du rectangle de la paroi de pose à l'intérieur d'un rail en U servant de structure de support sur lequel vient se fixer la console, la paroi de pose étant perpendiculaire à l'axe du rail en U, la console étant montée en porte-à-faux dans le rail, le rail étant, par exemple, disposé verticalement sur un mur.

Les parois latérales ont des dimensions calculées en fonction des efforts à supporter et possèdent généralement une forme de trapèze rectangle dont la grande base est appliquée au fond du rail en U lorsque la console est mise en position dans le rail.

Chacune des parois latérales comporte pour le montage sur le rail au moins une perforation située au voisinage de la grande base du trapèze et de la paroi de pose, les perforations se faisant face sur les parois latérales respectives, afin de permettre le passage d'une goupille qui passe également par des perforations en vis-à-vis prévues à espacement régulier sur les ailes du rail pour assurer le montage de la console sur le rail.

Une console telle que précédemment décrite nécessite la présence d'un rail ou d'une structure équivalente pour son montage.

On connaît d'autres types de consoles destinées exclusivement à un montage direct sur un mur ou sur une poutre et ne pouvant être montées à l'intérieur d'un rail en U ; elles comportent alors au moins une paroi dorsale percée de trous permettant le montage direct par boulonnage sur une paroi murale.

Le document DE-A-2 626 735 par exemple, décrit une console constituée par une tôle pliée et comportant une paroi de pose, une paroi latérale et une paroi dorsale.

On a cherché par la présente invention à réaliser des consoles plus économiques que les consoles traditionnelles décrites ci-dessus, ces consoles selon l'invention étant faciles à fabriquer et minimisant en particulier la quantité de matière à mettre en oeuvre tout en ayant la rigidité nécessaire pour supporter les conduits porteurs.

On a cherché également à ce que cette console soit, contrairement aux consoles décrites précédemment, aussi bien apte à être montée par encastrement en porte-à-faux dans un montant perforé du type rail en U qu'à être montée directement sur une paroi murale, évitant ainsi de tenir en stock et d'avoir à fabriquer des consoles différentes selon leur mode de pose.

On a en outre cherché à réaliser des consoles permettant une fixation simple de conduits porteurs.

On a de plus cherché à réaliser une console pouvant, avant tout, être utilisée pour la fixation de chemins de câbles en treillis de fils mais qui, moyennant adaptation minime, peut être utilisée indifféremment pour des chemins de câbles en treillis de fils ou pour des chemins de câbles en tôle.

Selon l'invention, la console destinée au supportage notamment de conduits porteurs est constituée par une tôle pliée et peut être montée encastrée en porte-à-faux sur un montant du type rail en U comportant sur chacune de ses ailes en vis-à-vis et, en général régulièrement espacées sur la longueur, des perforations aptes au passage d'une tige ou de tout moyen de montage équivalent de la console dans le rail tel qu'une goupille, une clavette ou autre.

Cette console est munie d'une paroi de pose comportant des moyens aptes à supporter et/ou fixer les conduits porteurs ou autres objets pour lesquels la console est susceptible d'être utilisée. Elle comporte en outre une paroi latérale unique disposée d'un seul coté, le long de la paroi de pose, paroi latérale dont la géométrie est telle qu'elle permet au montage de la console dans le rail de supporter les efforts à laquelle est soumise la paroi de pose, ainsi qu'une paroi dorsale, de dimensions telles qu'elle peut s'engager avec les jeux voulus à l'intérieur du rail. La paroi de pose, la paroi latérale et la paroi dorsale forment un trièdre dont deux arêtes sur les trois sont constituées par les plis de la tôle assurant le passage d'une paroi à une autre.

La paroi dorsale comporte un relief vers l'intérieur du trièdre, relief qui est disposé au voisinage de la paroi de pose et éloigné de la paroi latérale et qui constitue appui avec ou sans passage traversant pour une tige formant moyen de montage de la console sur le rail, la paroi latérale comportant un trou apte au passage de ladite tige.

Ledit trou et ledit relief sont disposés de façon à ce qu'une tige engagée dans ledit trou et dans deux perforations en vis-à-vis sur les deux ailes du rail s'appuie sur ledit relief et ainsi maintienne la paroi dorsale de la console à l'intérieur du rail, la paroi latérale étant engagée à l'intérieur du rail, réalisant de la sorte le montage encastré de la console dans le rail.

De façon préférentielle, la paroi latérale effectue la liaison entre la paroi de pose et la paroi dorsale, le passage de la paroi latérale à la paroi dorsale et de la paroi latérale à la paroi de pose se faisant par des plis de la tôle.

De préférence, les angles dièdres formés aux trois arêtes du trièdre sont des angles droits.

Bien entendu, la dimension en largeur de la paroi de pose sera apte à permettre son engagement à l'intérieur du rail . Toutefois, la largeur de cette paroi de pose au voisinage de la paroi dorsale ne sera pas nécessairement identique à la largeur de la paroi dorsale : elle pourra être, par raison d'économie de matière, d'une largeur inférieure à la largeur de la paroi dorsale.

Le relief disposé sur la paroi dorsale peut être formé par tout moyen constituant une zone d'appui pour une tige servant de moyen de montage de la console dans un rail, la zone d'appui pouvant comporter ou non un passage traversant par exemple du type trou pour la tige.

Ce relief peut être constitué par exemple par une déformation à froid de la paroi dorsale ou par découpage ou par ajout et fixation sur la paroi dorsale d'une pièce de forme voulue.

De façon préférentielle, ce relief sera constitué d'une patte en forme de quadrilatère de longueur voulue, découpée à la position voulue dans la paroi dorsale de la console puis rabattue avantageusement à angle droit par rapport à la paroi dorsale, la zone d'appui étant constituée par l'arête libre de la patte opposée à la paroi dorsale.

Dans un mode de réalisation particulier, l'arête libre d'appui de la patte sera constituée par la partie du bord de la paroi dorsale opposé à la paroi latérale, la patte correspondante étant rabattue de préférence à angle droit et le découpage de la patte étant réduit dans ce cas à deux arêtes au lieu de trois.

L'arête libre constituant relief pourra ou non comporter une encoche ou un trou pour y positionner une tige.

La zone d'appui du relief peut avantageusement constituer une came d'appui, la hauteur du relief par rapport à la paroi dorsale allant en augmentant quand on se rapproche de la paroi de pose.

Avantageusement on peut donner au trou disposé sur la paroi latérale pour le passage d'une tige la forme d'une boutonnière dont le grand axe est parallèle à l'arête d'appui du relief. Dans le cas où la zone d'appui comporte une came telle que décrite ci-dessus, on donnera alors au grand axe de la boutonnière une inclinaison sensiblement identique à celle de la came. De la sorte, l'inclinaison de la came et de la boutonnière permettent de mettre en appui, par glissement du trou et du relief sur une tige, la paroi dorsale sur le fond du rail et de rattraper les jeux de montage existants et/ou permettre l'adaptation de la console à la disposition et à la forme des perforations des ailes des rails.

La paroi latérale peut éventuellement comporter en outre au voisinage de la paroi dorsale mais à distance de la paroi de pose un deuxième trou servant à sécuriser le montage de la console sur le rail, un moyen de montage complémentaire tel que, par exemple, un boulon, étant passé à travers ce second trou de la paroi latérale et à travers une perforation correspondante de l'aile du rail qui longe la paroi latérale.

Très avantageusement, afin de pouvoir utiliser la console également en montage direct, c'est-à-dire sans l'utilisation d'un montant du type rail, on munit la paroi dorsale d'au moins un trou pour permettre l'utilisation de moyens de montage complémentaires connus, par exemple de type boulon. La console peut de la sorte être montée directement sur une paroi, sur une poutre ou autre.

De façon préférentielle, on munira la paroi dorsale de la console d'un deuxième trou disposé à distance en dessous du trou ci-dessus défini.

Il est possible de renforcer ou raidir mécaniquement la console par une ou plusieurs rebords, nervures, replis ou déformations de métal disposés aux endroits voulus, ce qui permet d'utiliser une tôle mince pour la réaliser.

La paroi de pose de la console selon l'invention présente une longueur adaptée à la largeur des conduits porteurs à supporter et est munie de moyens permettant, soit à eux seuls soit avec d'autres moyens complémentaires, la fixation de ces conduits porteurs. Ces moyens peuvent par exemple être des moyens de boulonnage, d'accrochage ou tout autre moyen équivalent.

Les moyens de fixation des conduits porteurs sur la paroi de pose comprennent un moyen d'accrochage de conduits porteurs constitués de treillis de fils longitudinaux et transversaux.

Pour ce faire, selon un premier mode particulier de réalisation de l'invention, la paroi de pose de la console comporte un système d'encoches découpées à cheval dans la paroi de pose et sur les extrémités de la paroi latérale et d'un rebord continu de la paroi de pose, rebord formé du coté longitudinal opposé à celui où est disposée la paroi latérale et possédant une hauteur suffisante pour contenir les encoches.

Selon un deuxième mode particulier de réalisation de l'invention, la paroi de pose comporte un bord libre du coté longitudinal opposé à celui où est disposée la paroi latérale et un système d'encoches découpées à cheval dans la paroi de pose et sur les extrémités de la paroi latérale, les encoches divisant alors la paroi de pose en îlots.

Dans un mode particulier ou dans l'autre, les encoches sont recouvertes sur une fraction de leur longueur de languettes réalisées dans la paroi de pose, l'espace laissé libre sur la paroi de pose étant dimensionné de façon à permettre le passage des fils longitudinaux des conduits porteurs en treillis de fils.

De telles encoches et languettes constituent des logements pouvant être adaptés par leurs dimensions et leur pas de répétition sur la paroi de pose à la réception par simple emboîtement des fils longitudinaux des conduits porteurs constitués d'un treillis de fils, les languettes pouvant ou non être rabattues sur les fils pour solidariser les conduits porteurs sur la console.

Lorsque la languette n'est pas rabattue, c'est l'ensemble encoches plus languettes qui constitue des logements pour les fils longitudinaux des conduits porteurs en treillis de fils, chaque languette prolongeant le logement correspondant.

Les languettes non rabattues sur les fils longitudinaux des conduits porteurs sont avantageusement disposées de façon à ne pas se trouver en saillie par rapport à la paroi de pose.

Suivant la largeur de la paroi de pose, les languettes peuvent, pour chaque encoche, être réalisées en une ou plusieurs parties et être plus ou moins larges.

Préférentiellement lorsqu'elles sont moins larges que la paroi de pose, les languettes ne sont pas disposées au milieu de la largeur de celle-ci mais à proximité de la paroi latérale afin, notamment, de diminuer le couple susceptible de déformer la paroi de pose lors du mouvement de rabattement des languettes.

Avantageusement dans le deuxième mode particulier de réalisation de l'invention, chaque îlot de tôle peut être rigidifié par un très court rebord du côté du bord libre opposé à la paroi latérale.

Il est à noter que, dans le deuxième mode particulier de réalisation de l'invention, ce sont des couples de consoles qui immobilisent les éléments de conduits porteurs situés entre elles, les fils longitudinaux des conduits porteurs passant dans une simple série d'encoches découpées dans la paroi latérale unique de chaque console.

Avantageusement et indépendamment des modes présentés ci-dessus de réalisation de l'invention, la paroi de pose peut comporter un deuxième moyen de fixation des conduits porteurs sur la console. Ce dit deuxième moyen de fixation est destiné à permettre, soit seul, soit avec l'aide de moyens complémentaires non liés à la console d'utiliser la console selon l'invention pour supporter et fixer des conduits porteurs autres que des conduits porteurs en treillis de fils, tels que, par exemple, des conduits porteurs en tôle perforée ou bien encore pour fixer des pendards ou des tiges filetées ou tout ce qui est destiné à venir se disposer sur la console.

De façon préférentielle, ce dit deuxième moyen de fixation sera constitué d'au moins une perforation, avantageusement de forme oblongue, disposée sur les parties non découpées de la paroi de pose entre les encoches.

Lesdits moyens de fixation complémentaires non liés à la console pourront, par exemple, être constitués de boulons.

De manière optionnelle, la partie de la paroi de pose la plus proche de la paroi dorsale peut être prolongée par une patte rabattue contre la face externe de la paroi dorsale contribuant ainsi à rigidifier la paroi de pose, l'angle dièdre entre paroi latérale et paroi dorsale et celui entre paroi de pose et paroi dorsale.

Pour ne pas que la patte une fois rabattue forme surépaisseur sur la paroi dorsale, la partie de cette dernière voisine de la paroi de pose et venant en contact avec la languette peut être légèrement emboutie vers l'intérieur de la console sur une profondeur égale à l'épaisseur de la tôle.

De la sorte, la console selon l'invention est d'usage très universel.

Avantageusement, la console selon l'invention est obtenue par découpe d'une forme développée de la console dans une tôle et pliage, cette forme étant répétée sous forme de motif périodique dans la tôle de manière à minimiser les chutes de découpage et la quantité de matière à mettre en oeuvre. Entre découpe et pliage, une opération d'emboutissage peut éventuellement compléter la mise en forme des différentes parties de la console.

Les figures ci-après décrivent de façon détaillée mais non limitative deux modes particuliers de réalisation d'une console selon l'invention et des exemples de fixation de chemins de câbles de divers types sur les consoles obtenues.

La figure 1 est une vue en perspective d'une console selon un premier mode de réalisation de l'invention, console montée encastrée sur un rail en U disposé verticalement.

La figure 2 représente une vue de face de la console de la figure 1.

La figure 3 représente une vue de gauche de la console de la figure 1.

La figure 4 représente une vue de dessus de la console de la figure 1.

La figure 5 montre la forme développée de la console selon la figure 1 avec la disposition des découpes et des emboutis pour la réaliser en série à partir d'une tôle.

La figure 6 illustre la fixation par boulonnage d'un chemin de câble en tôle perforée sur la console de la figure 1. Pour simplifier la figure, la console n'a pas été représentée montée sur un rail ou une paroi.

La figure 7 montre la fixation par emboîtement d'un chemin de câble en treillis de fils sur la console de la figure 1. Pour simplifier la figure, la console n'a pas été représentée montée sur un rail ou une paroi.

La figure 8 est une vue en perspective d'une console selon un deuxième mode de réalisation de l'invention, console montée encastrée sur un rail en U disposé verticalement.

La figure 9 représente une vue de face de la console de la figure 8.

La figure 10 représente une vue de gauche de la console de la figure 8.

La figure 11 représente une vue de dessus de la console de la figure 8.

La figure 12 montre la forme développée dans une tôle d'une console selon la figure 8 avec la disposition des découpes et des emboutis pour la réaliser.

La figure 13 illustre la fixation par boulonnage d'un chemin de câble en tôles sur la console de la figure 8. Pour simplifier la figure, la console n'a pas été représentée montée sur un rail ou sur une paroi.

La figure 14 montre la fixation par emboîtement d'un chemin de câble en treillis de fils sur la console de la figure 8. Pour simplifier la figure, la console n'a pas été représentée montée sur un rail ou sur une paroi.

La figure 15 représente un détail du mode de fixation du chemin de câbles représenté à la figure 14.

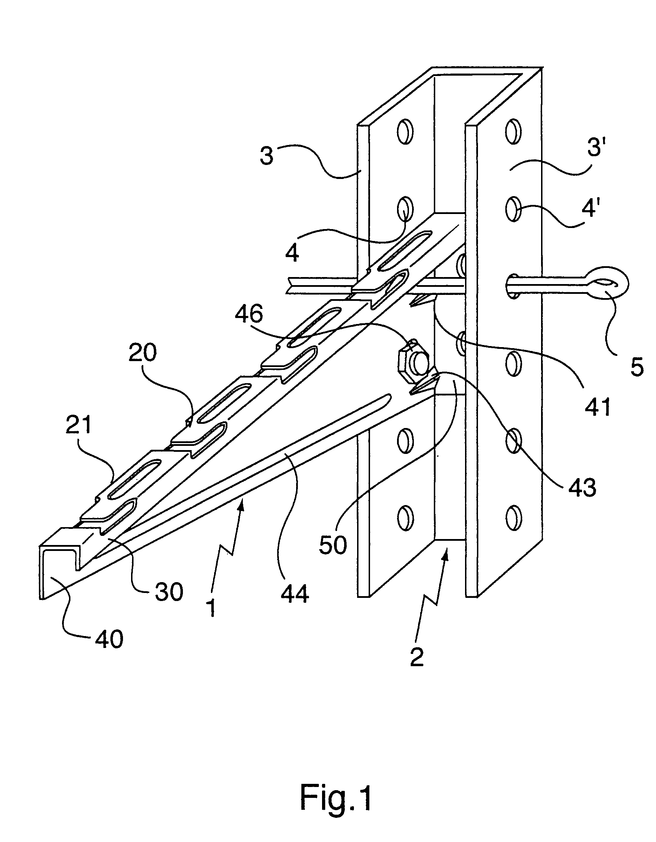

La figure 1 représente une console 1 selon l'invention constituée par une tôle découpée et pliée et montée en porte-à-faux encastrée sur un rail en U 2 comportant sur chacune de ses deux ailes 3 et 3' des perforations 4 et 4' régulièrement espacées aptes au passage d'une tige 5 du genre goupille perpendiculairement aux ailes 3 et 3' de façon à permettre le montage de la console 1 dans le rail 2.

La console 1 selon l'invention est munie d'une paroi de pose 20 de forme rectangulaire; elle comporte également une paroi latérale unique 40 de forme trapézoïdale rectangle disposée d'un seul côté le long de la paroi de pose 20 ainsi qu'une paroi dorsale 50 de forme rectangulaire et de largeur telle qu'elle puisse s'engager avec un faible jeu à l'intérieur du rail 2.

Paroi de pose 20, paroi latérale 40 et paroi dorsale 50 forment un trièdre à angles droits, les plis 21 et 41 de la tôle assurant le passage respectivement de la paroi de pose à la paroi latérale et de la paroi latérale à la paroi dorsale, la paroi latérale effectuant la liaison entre la paroi de pose et la paroi dorsale.

Le pli 21 constitue à la fois un grand côté du rectangle formant la paroi de pose 20 et la hauteur du trapèze rectangle formant la paroi latérale 40.

Le pli 41 constitue à la fois un grand côté du rectangle formant la paroi dorsale 50 et la grande base du trapèze rectangle formant la paroi latérale 40.

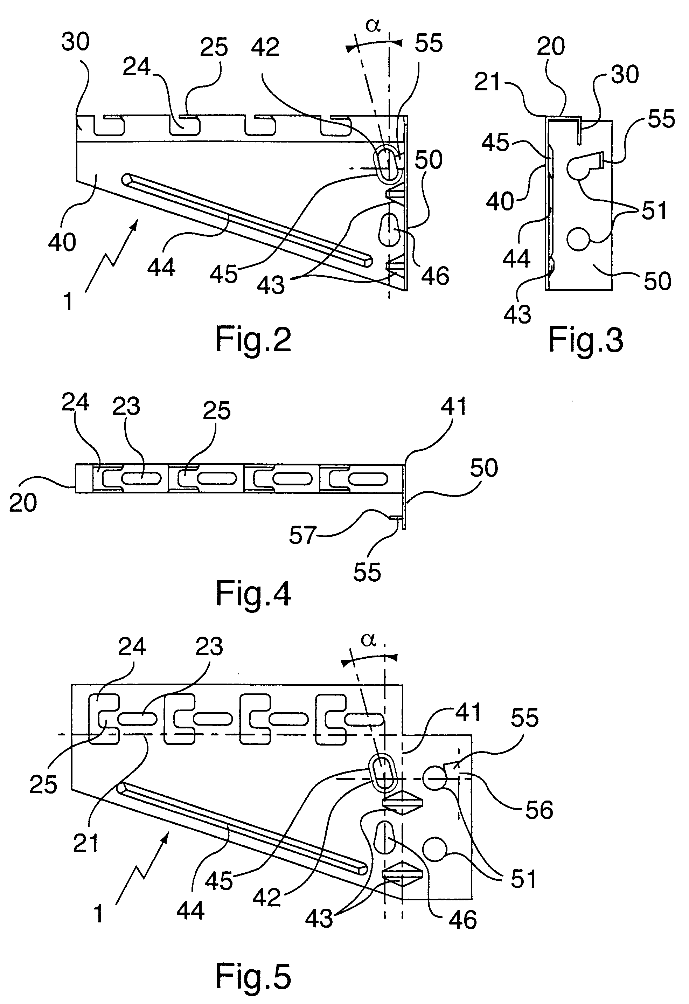

Les figures 2, 3 et 4 illustrent plus précisément les dispositifs de la console 1 permettant le montage de celle-ci sur un rail 2 ou directement sur une paroi.

La paroi dorsale 50 comporte une patte 55 disposée au voisinage de la paroi de pose 20 et dirigée vers l'intérieur du trièdre formé par les parois 20, 40, 50 de la console 1. Cette patte 55, perpendiculaire à la paroi dorsale 50 et parallèle à la paroi latérale 40, est disposée au voisinage du bord de la paroi dorsale opposé au pli 41 et présente une arête libre 57 opposée à la paroi dorsale. L'arête libre 57 constitue ainsi un relief d'appui pour la goupille fendue 5 assurant le montage de la console 1 sur le rail 2, goupille passant à travers deux perforations 4 et 4' en vis-à-vis sur le rail 2 et à travers un trou 42 percé dans la paroi latérale 40.

La patte 55 et le trou 42 sont disposés par rapport aux parois du trièdre de manière à ce que la goupille 5 passée à travers les perforations 4 et 4', le trou 42 et en appui sur l'arête 57 applique la paroi dorsale 50 de la console 1 contre le fond du rail 2, la paroi latérale 40 étant engagée contre une aile 3 du rail 2, le montage encastré de la console 1 sur le rail 2 étant ainsi assuré.

La patte 55 a une forme générale de quadrilatère et est avantageusement obtenue par découpe de trois arêtes dans la paroi dorsale 50 et pliage à angle droit autour de l'arête 56 non découpée.

L'arête d'appui 57 de la patte 55 n'est pas parallèle au pli 56 ni au pli 41 mais forme avec ceux-ci un angle α, par exemple de l'ordre de 15°, la distance d'un point de l'arête 57 à la paroi dorsale 50 augmentant lorsqu'on se rapproche de la paroi de pose.

Le trou 42 dans la paroi latérale 40 a une forme de boutonnière dont le grand axe est parallèle à l'arête d'appui 57, et forme donc également un angle α avec l'arête 41.

Ainsi l'arête 57 forme une came d'appui pour la goupille 5, le poids des chemins de câbles et de la console 1 elle-même tendant à appliquer la console 1 contre le fond du rail 2 en s'adaptant aux petites variations géométriques des perforations 4, 4'.

Le trou 42 présente un bord rabattu en forme de collerette 45 perpendiculairement à la paroi latérale dont il est issu; ainsi la goupille 5 exerce lors du montage une pression répartie sur une surface plus importante que celle définie par l'épaisseur de la tôle.

Une fois la goupille 5 passée, on peut rabattre son extrémité libre pour empêcher qu'elle ne saute par la suite; la goupille 5 n'a pas été représentée rabattue à la figure 1.

A noter que, de manière très avantageuse, la section droite de la goupille 5 n'est pas circulaire au niveau du passage dans la boutonnière 42 et de l'arête d'appui 57 du relief, le diamètre minimal et le diamètre maximal de la goupille 5 y étant respectivement un peu inférieur et supérieur à la largeur de la boutonnière 42; ainsi, une fois passée à travers les différents trous et perforations, une rotation d'un quart de tour de la goupille 5 bloque cette dernière contre le bord de la boutonnière et contre l'arête d'appui 57 du relief et empêche qu'elle ne saute par la suite.

La paroi latérale 40 comporte en outre un trou 46 de forme générale triangulaire arrondie sous le trou 42 à distance adéquate du trou 42 et de la paroi dorsale 50 pour permettre le passage d'un boulon 48 au travers de ce trou et d'une des perforations 4 d'une aile 3 du rail 2 et sécuriser, si besoin est, le montage de la console 1 sur le rail 2.

La paroi dorsale 50 présente également à mi-largeur deux trous 51 superposés et à distance l'un de l'autre pour permettre le passage de moyens tels que des boulons de montage direct de la console sur une paroi murale, sur une poutre ou autre. Il s'agit alors d'un mode de montage alternatif de la console sans l'encastrer dans un rail.

L'angle dièdre droit entre paroi latérale 40 et paroi dorsale 50 est rigidifié par deux emboutis 43.

La paroi latérale 40 qui a pour but de transmettre le poids des conduits porteurs à la paroi dorsale 50 (appliquée au fond du rail 2) est renforcée pour empêcher son flambage par la nervure emboutie 44.

La paroi de pose 20 a une largeur inférieure à la largeur de la paroi dorsale 50, ce qui, d'une part autorise le montage encastré de la console 1 dans le rail 2, d'autre part permet d'économiser de la surface de tôle. La longueur du grand côté de la paroi de pose 20 est adaptée à la largeur de l'élément ou des éléments de conduits porteurs à supporter.

La paroi de pose est munie le long du côté opposé au pli 21 d'un rebord continu 30 de hauteur adéquate et constante obtenu par pliage à angle droit vers l'intérieur du bord libre de la paroi de pose dimensionnée en conséquence.

La paroi de pose 20 est également munie de moyens de fixation de conduits porteurs.

Elle comporte à cet effet à mi-largeur des perforations 23 en forme de boutonnière permettant, par exemple, la fixation par boulonnage de chemins de câbles, notamment ceux du genre en tôle perforée.

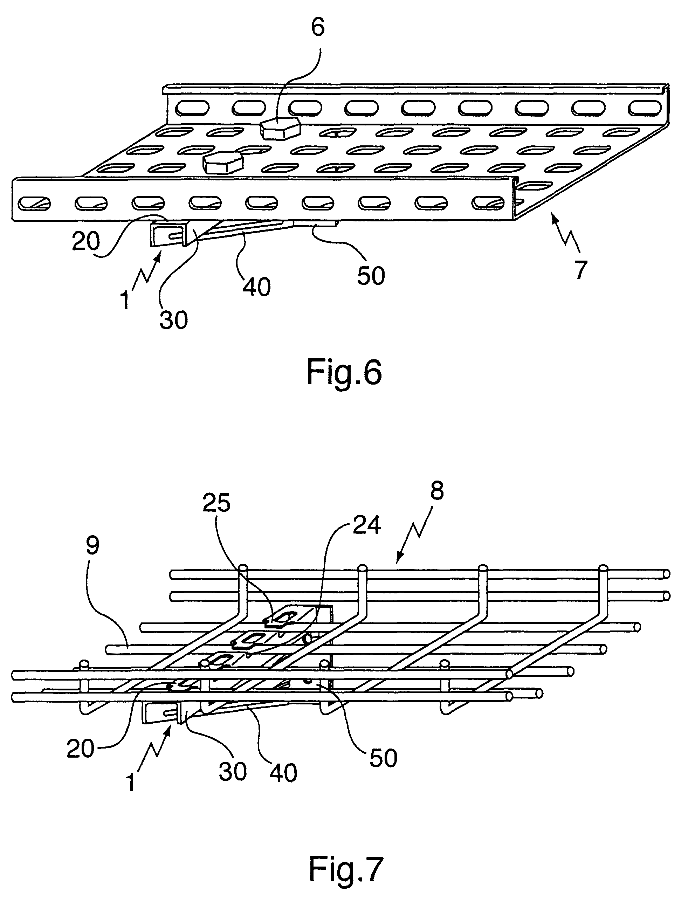

La figure 6 montre un tel chemin de câbles 7 en tôle perforée fixé sur la console 1: les boulons 6 passés à travers des perforations 23 de la console 1 et les perforations du fond du chemin de câbles 7 permettent la fixation de ces deux éléments, la fréquence de répétition des perforations 23 correspondant au pas des perforations dans le fond du chemin de câbles 7.

La console 1 comporte également un système d'encoches 24 découpées à cheval dans la paroi de pose 20, sur les extrémités de la paroi latérale 40 et du rebord 30, lesdites encoches 24 étant surmontées de languettes 25 ménagées dans la paroi de pose 20 sur une fraction de la longueur des encoches 24, fraction permettant le libre passage dans les encoches de fils longitudinaux des chemins de câbles à disposer sur les consoles.

Comme montré à la figure 7, ces encoches 24 et languettes 25 constituent des logements pour les fils longitudinaux 9 d'un chemin de câbles 8 réalisé à partir d'un treillis de fils, la fréquence de répétition des encoches étant adaptée au pas des fils longitudinaux 9.

Après insertion des fils 9 dans les encoches 24, les languettes 25 peuvent être rabattues sur les fils 9 pour solidariser les chemins de câbles 8 sur la paroi de pose 20; la figure 7 ne représente pas les languettes 25 rabattues sur les fils 9.

La figure 5 montre un mode de fabrication de la console 1 par découpe et pliage d'une forme développée dans une tôle. La forme représentée à la figure 5 est répétée sous forme de motif périodique dans la tôle de manière à minimiser les chutes de découpage et la quantité de matière à mettre en oeuvre et comporte la disposition de toutes les découpes et emboutis nécessaires à la réalisation de la console 1.

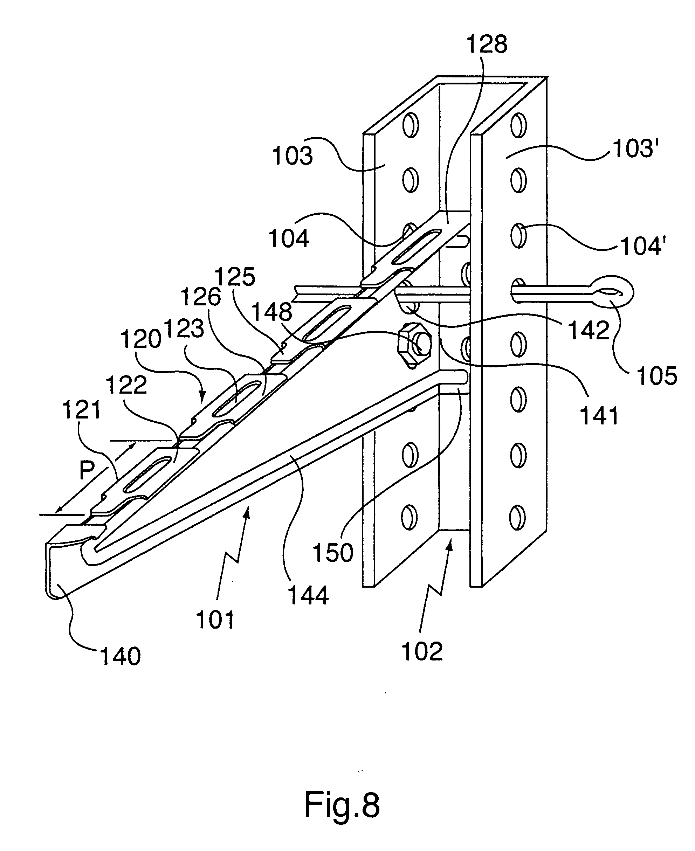

La figure 8 représente une autre console 101 selon l'invention constituée par une tôle découpée et pliée, montée en porte-à-faux à l'aide d'une goupille 105 encastrée sur un montant 102 du type rail en U, lequel comporte sur chacune de ses deux ailes 103 et 103' des perforations 104 et 104' régulièrement espacées.

La console 101 selon l'invention est munie d'une paroi de pose 120 inscrite dans un rectangle ; elle comporte également une paroi latérale unique 140 de forme trapézoïdale rectangle disposée d'un seul côté le long de la paroi de pose 120 ainsi qu'une paroi dorsale 150 de forme rectangulaire et de largeur telle qu'elle puisse s'engager avec un faible jeu à l'intérieur du rail 102, la largeur de la paroi de pose 120 étant inférieure à celle de la paroi dorsale 150.

Paroi de pose 120, paroi latérale 140 et paroi dorsale 150 forment un trièdre à angles droits, les plis 121 et 141 de la tôle assurant le passage respectivement de la paroi de pose à la paroi latérale et de la paroi latérale à la paroi dorsale, la paroi latérale effectuant la liaison entre paroi de pose et la paroi dorsale.

Le pli 121 constitue à la fois un grand côté du rectangle formant la paroi de pose 120 et la hauteur du trapèze rectangle formant la paroi latérale 140.

Le pli 141 constitue à la fois un grand côté du rectangle formant la paroi dorsale 150 et la grande base du trapèze rectangle formant la paroi latérale 140.

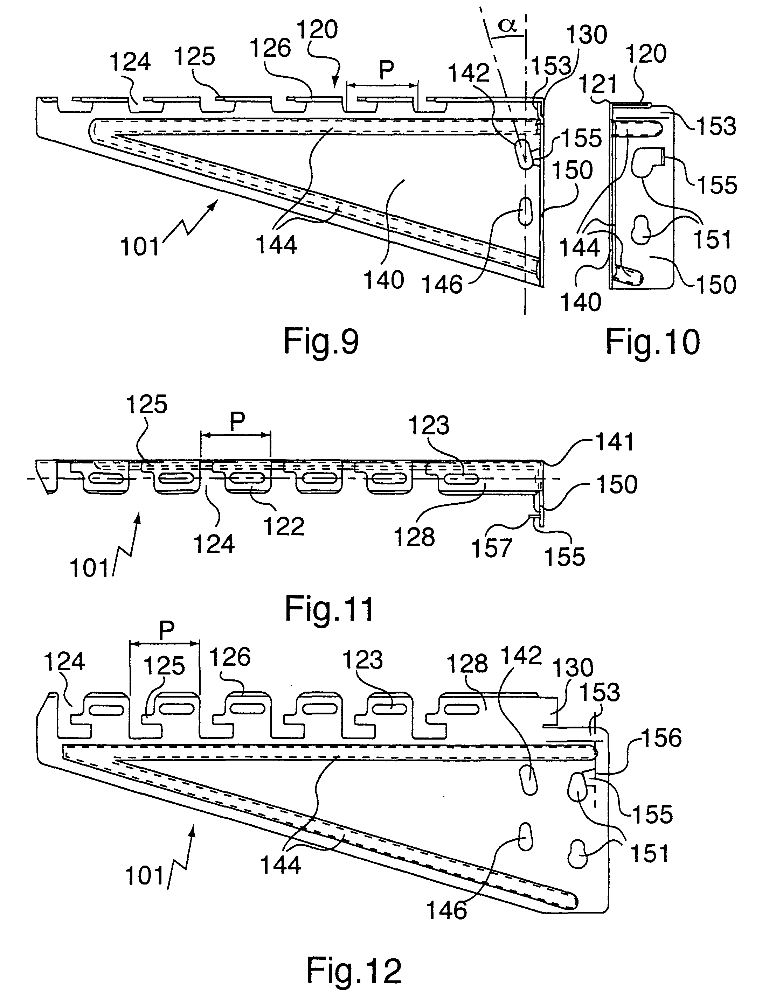

Les figures 9, 10 et 11 illustrent plus précisément les dispositifs de la console 101 permettant le montage de celle-ci sur un rail 102 ou directement sur une paroi.

La paroi dorsale 150 comporte une patte 155 disposée au voisinage de la paroi de pose 120 et dirigée vers l'intérieur du trièdre formé par les parois 120, 140, 150 de la console 101. Cette patte 155, perpendiculaire à la paroi dorsale 150 et parallèle à la paroi latérale 140, est disposée au voisinage du bord de la paroi dorsale opposé au pli 141 et présente une arête libre 157 opposée à la paroi dorsale. L'arête libre 157 constitue ainsi un relief d'appui pour la goupille fendue 105 assurant le montage de la console 101 sur le rail 102, goupille passant à travers deux perforations 104 et 104' en vis-à-vis sur le rail 102 et à travers un trou 142 percé dans la paroi latérale 140.

La patte 155 et le trou 142 sont disposés par rapport aux parois du trièdre de manière à ce que la goupille 105 passée à travers les perforations 104 et 104', le trou 142 et en appui sur l'arête 157 applique la paroi dorsale 150 de la console 101 contre le fond du rail 102, la paroi latérale 140 étant engagée contre une aile 103 du rail 102, le montage encastré de la console 101 sur le rail 102 étant ainsi assuré.

La patte 155 a une forme générale de quadrilatère et est avantageusement obtenue par découpe de trois arêtes dans la paroi dorsale 150 et pliage à angle droit autour de l'arête 156 non découpée.

L'arête d'appui 157 de la patte 155 n'est pas parallèle au pli 156 ni au pli 141 mais forme avec ceux-ci un angle α, par exemple de l'ordre de 15°, la distance d'un point de l'arête 157 à la paroi dorsale 150 augmentant lorsqu'on se rapproche de la paroi de pose.

Le trou 142 dans la paroi latérale 140 a une forme de boutonnière dont le grand axe est parallèle à l'arête d'appui 157, et forme donc également un angle α avec l'arête 141.

Ainsi l'arête 157 forme une came d'appui pour la goupille 105, le poids des chemins de câbles et de la console 101 elle-même tendant à appliquer la console 101 contre le fond du rail 102 en s'adaptant aux petites variations géométriques des perforations 104, 104'.

La paroi latérale 140 comporte en outre sous le trou 142 un trou 146 de forme générale triangulaire arrondie à distance adéquate du trou 142 et de la paroi dorsale 150. Un boulon 148 passé au travers de ce trou et d'une perforation 104 de l'aile 103 du rail 102 permet de sécuriser, si besoin est, le montage de la console 101 sur le rail 102.

La paroi dorsale 150 de la console 101 présente à mi-largeur deux trous superposés 151 à distance l'un de l'autre afin de permettre le passage de vis ou boulons pour le montage direct de la console 101 sur une paroi murale ou sur une poutre. Il s'agit alors d'un mode de montage alternatif de la console où celle-ci n'est pas encastrée dans un rail.

La paroi latérale 140 qui a pour but de transmettre le poids des chemins de câbles à la paroi dorsale 150 est renforcée pour empêcher son flambage par les nervures embouties 144 qui se prolongent sur la paroi dorsale 150.

Les nervures 144 rigidifient aussi l'angle dièdre droit entre paroi dorsale 150 et paroi latérale 140.

Les mêmes figures 9 à 11 présentent aussi une variante permettant de rigidifier le même angle ainsi celui entre paroi de pose 120 et paroi dorsale 150.

Pour ce faire, la partie 128 de la paroi de pose contiguë à la paroi dorsale 150 est prolongée vers l'extérieur de la paroi dorsale 150 par une patte 130 rabattue à angle droit par dessus la paroi dorsale 150.

Pour ne pas former une surépaisseur gênant le montage de la console 101, la partie supérieure 153 de la paroi dorsale 150 venant en contact avec la patte 130 rabattue est légèrement emboutie vers l'intérieur de la console sur une profondeur égale à l'épaisseur de la tôle de la console.

La figure 12 montre un mode de fabrication de la console 101 par découpe et pliage d'une forme développée dans une tôle. La forme représentée à la figure 12 est répétée sous forme de motif périodique dans la tôle de manière à minimiser les chutes de découpage et la quantité de matière à mettre en oeuvre et comporte la disposition de toutes les découpes et emboutis nécessaires à la réalisation de la console 101.

Pour assurer le montage de chemins de câbles sur la paroi de pose 120 de la console 101, des encoches 124 disposées périodiquement avec un pas P le long du pli 121 sont découpées à cheval sur le pli 121 en affectant toute la largeur de la paroi de pose 120 qu'elles divisent en îlots 122, le côté opposé au pli 121 étant un bord libre.

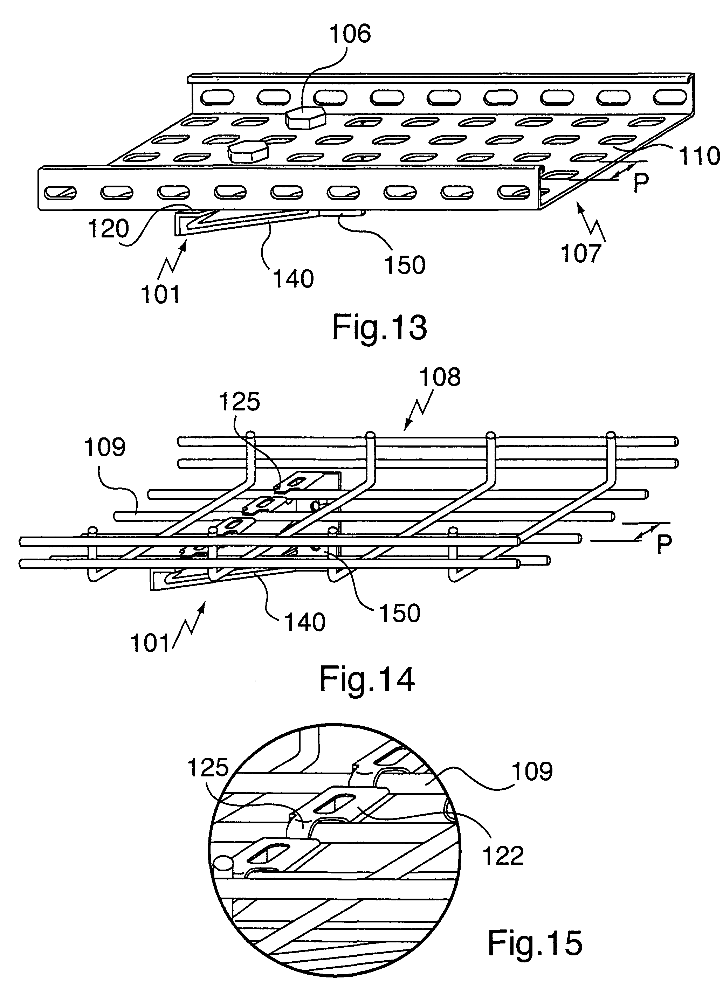

Les encoches 124 délimitent dans la paroi latérale 140 le long de l'arête 121 des vides périodiques de forme générale rectangulaire et sont surmontées par des languettes 125 prolongeant chaque îlot 122, ces languettes étant ménagées sur une fraction de la longueur des encoches 124 de manière à permettre l'introduction des fils longitudinaux 109 (figure 14) des chemins de câbles en treillis de fils.

Les encoches 124 et les languettes 125 constituent ainsi des logements pour les fils longitudinaux 109 des chemins de câbles en treillis de fils, la fréquence de répétition P des encoches correspondant au pas des fils longitudinaux 109.

Après insertion des fils longitudinaux 109 dans les encoches 124, les languettes 125 peuvent être rabattues sur lesdits fils 109 comme montré à la figure 15 pour les empêcher de sortir de leur logement.

Les languettes 125 sont disposées au voisinage de l'arête 121 dans une position telle qu'elles peuvent être rabattues sans buter sur l'arête 121.

Les languettes 125 non rabattues sur les fils longitudinaux 109 des chemins de câbles ne se trouvent pas en saillie par rapport à la paroi de pose 120 et ne risquent pas de venir blesser les câbles susceptibles d'être contenus dans les chemins de câbles 108.

La console comporte un deuxième moyen de fixation de chemins de câbles décrit ci-après.

Au centre de chaque îlot 122, se trouve une perforation oblongue 123 dont le grand axe est parallèle au grand côté de la paroi de pose 120; les perforations 123 sont ainsi répétées selon le pas P le long de la paroi de pose à mi-largeur de celle-ci.

Comme montré à la figure 13, les perforations 123 permettent de fixer un chemin de câbles en tôle perforée 107 à l'aide de boulons 106 passant à travers de perforations en regard de la surface de pose de la console et de la paroi dorsale du chemin de câbles.

Le bord libre des îlots opposé à l'arête 121 est rabattu à angle droit vers l'intérieur du trièdre formé par les parois de la console sur une très faible hauteur de l'ordre de 2 mm de manière à réaliser un très court rebord 126, ce qui permet de rigidifier longitudinalement les îlots 122 par augmentation de leur module d'inertie.

En outre, les contours de chaque îlot 122 constituant la paroi de pose 120 sont arrondis pour éviter des blessures, notamment lors du montage.

La console selon l'invention peut faire l'objet de nombreuses variantes de réalisation restant dans le domaine de la protection revendiquée.

## Revendications

1. Console (1,101) pour notamment des conduits porteurs (7, 8, 107, 108) constituée par une tôle pliée, destinée à être montée encastrée sur un montant (2, 102) du type rail en U dont les ailes (3, 103) et (3', 103') comportent des perforations en vis-à-vis (4, 104) et (4', 104') et munie d'une paroi de pose (20, 120), **caractérisée en ce qu'**elle comporte une paroi latérale (40, 140) unique et une paroi dorsale (50, 150) de dimensions aptes à s'engager à l'intérieur du rail, les parois de pose, latérale et dorsale formant un trièdre dont deux arêtes (21, 121) et (41, 141) sont constituées par les plis de la tôle assurant le passage d'une paroi à une autre paroi, **en ce que** la paroi dorsale comporte un relief vers l'intérieur du trièdre, relief disposé au voisinage de la paroi de pose et éloigné de la paroi latérale, ce relief constituant appui pour une tige (5, 105) formant moyen de montage de la console sur le rail (2, 102) et **en ce que** la paroi latérale comporte un trou (42, 142) apte au passage de ladite tige (5, 105), le trou (42, 142) et le relief étant disposés de façon à ce que ladite tige (5, 105) engagée dans deux perforations en vis-à-vis (4, 4', 104, 104') des deux ailes (3, 3', 103, 103') du rail maintienne la paroi dorsale (50, 150) de la console à l'intérieur du rail.

2. Console selon la revendication 1 **caractérisée en ce que** la paroi latérale (40, 140) effectue la liaison entre la paroi de pose (20, 120) et la paroi dorsale (50, 150).

3. Console selon la revendication 1 ou 2 **caractérisée en ce que** les angles dièdres formés aux trois arêtes du trièdre sont des angles droits.

4. Console selon l'une quelconque des revendications 1 à 3 **caractérisée en ce que** le relief constituant appui pour une tige (5, 105) comporte un passage traversant pour ladite tige.

5. Console selon l'une quelconque des revendications 1 à 4 **caractérisée en ce que** ledit relief est constitué par l'arête libre (57, 157) d'une patte (55, 155) découpée dans la paroi dorsale (50, 150) et rabattue, l'arête libre (57, 157) formant zone d'appui pour la tige (5, 105) permettant le montage de la console (1, 101) sur le rail (2, 102).

6. Console selon l'une quelconque des revendications 1 à 5 **caractérisée en ce que** la zone d'appui du relief (57, 157) constitue une came, la hauteur du relief par rapport à la paroi dorsale (50, 150) allant en augmentant quand on se rapproche de la paroi de pose (20, 120) et **en ce que** le trou (42, 142) disposé sur la paroi latérale (40, 140) pour le passage d'une tige (5, 105) a la forme d'une boutonnière dont le grand axe a une inclinaison sensiblement identique à celle de la came.

7. Console selon l'une quelconque des revendications 1 à 6 **caractérisée en ce que** le bord du trou (42) de la paroi latérale (40) est rabattu en forme de collerette (45) perpendiculairement à la paroi latérale.

8. Console selon l'une quelconque des revendications 1 à 7 **caractérisée en ce que** la paroi latérale (40, 140) est munie d'un second trou (46, 146) situé au voisinage de la paroi dorsale (50, 150) mais à distance du premier pour sécuriser le montage de la console (1, 101) sur le rail (2, 102) en passant un moyen du type boulon (48, 148) au travers de ce second trou et d'une perforation correspondante (4, 104) de l'aile (3, 103) du rail sur laquelle la paroi latérale prend appui.

9. Console selon l'une quelconque des revendications 1 à 8 **caractérisée en ce que** la paroi dorsale (50, 150) est munie d'au moins un trou (51, 151) permettant le passage d'un moyen de montage direct de la console sur une paroi, sur une poutre ou autre.

10. Console selon l'une quelconque des revendications 1 à 9 **caractérisée en ce que** la largeur de la paroi de pose (20, 120) est inférieure à la largeur de la paroi dorsale (50, 150).

11. Console selon l'une quelconque des revendications 1 à 10 **caractérisée en ce que** la paroi de pose (20, 120) est munie d'un moyen de fixation des conduits porteurs (8, 108) en treillis de fils.

12. Console selon la revendication 11 **caractérisée en ce que** la paroi de pose (20) comporte un système d'encoches (24) découpées à cheval dans la paroi de pose et sur les extrémités de la paroi latérale (40) et d'un rebord continu (30) de la paroi de pose formé du côté opposé à la paroi latérale, lesdites encoches (24) étant surmontées de languettes (25) ménagées dans la paroi de pose sur une fraction de la longueur des encoches (24), ces encoches constituant par leurs dimensions et leur intervalle de répétition P sur ladite paroi de pose (20) des logements pour recevoir des fils longitudinaux (9) de conduits porteurs en treillis de fils (8), les bords de chaque encoche sur la paroi de pose constituant une languette (25) apte à être rabattue sur un fil longitudinal engagé dans ladite encoche.

13. Console selon la revendication 11 **caractérisée en ce que** la paroi de pose (120) comporte un bord libre du côté longitudinal opposé à la paroi latérale (140) et un système d'encoches (124) découpées à cheval dans la paroi de pose et sur les extrémités de la paroi latérale, lesdites encoches (124) étant surmontées de languettes (125) ménagées dans la paroi de pose sur une fraction de la longueur des encoches (124), ces encoches constituant par leurs dimensions et leur intervalle de répétition P sur ladite paroi de pose (120) des logements pour recevoir des fils longitudinaux (109) de conduits porteurs en treillis de fils (108), les bords de chaque encoche sur la paroi de pose constituant une languette (125) apte à être rabattue sur un fil longitudinal engagé dans ladite encoche.

14. Console selon la revendication 13 **caractérisée en ce qu'**un rebord (126) de très faible hauteur est formé sur les îlots (122) de la paroi de pose (120) le long de leur bord libre opposé à la paroi latérale (140).

15. Console selon l'une quelconque des revendications 12 à 14 **caractérisée en ce que** le bord de chaque encoche (124) formant languette (125) a, sur une certaine longueur, une largeur inférieure à celle de la paroi de pose (120).

16. Console selon la revendication 15 **caractérisée en ce que** le bord de chaque encoche (124) sur la paroi de pose formant languette (125) est disposé à proximité de la paroi latérale (140).

17. Console selon l'une quelconque des revendications 1 à 16 **caractérisée en ce que** la paroi de pose (20, 120) est munie d'un moyen de fixation de conduits porteurs (7, 107) autres que ceux en treillis de fils ou de fixation d'autres accessoires.

18. Console selon la revendication 17 **caractérisée en ce que** le moyen de fixation consiste en au moins une perforation (23, 123).

19. Console selon l'une quelconque des revendications 1 à 18 **caractérisée en ce que** la partie (128) de la paroi de pose (120) voisine de la paroi dorsale (150) se prolonge par une patte (130) rabattue contre la face externe de ladite paroi dorsale.

20. Console selon la revendication 19 **caractérisée en ce que** la partie (153) de la paroi dorsale (150) voisine de la paroi de pose (120) et venant en contact avec la patte (130) est légèrement emboutie vers l'intérieur de la console sur une profondeur égale à l'épaisseur de tôle de manière à ce que ladite patte une fois rabattue ne forme pas surépaisseur par rapport à la paroi dorsale (150).

21. Console selon l'une quelconque des revendications 1 à 20 **caractérisée en ce que** l'une au moins des parois latérale (40, 140) ou dorsale (50, 150) est raidie par un moyen approprié tel que, par exemple, au moins une nervure emboutie en creux (44, 144) ou un moyen équivalent.

22. Console selon l'une quelconque des revendications 1 à 21 **caractérisée en ce que** l'angle dièdre entre paroi latérale (40, 140) et paroi dorsale (50, 150) est raidi par un moyen approprié tel que, par exemple, au moins un embouti (43) à cheval sur l'arête (41, 141) dudit dièdre ou un moyen équivalent.

23. Procédé de réalisation de console selon l'une quelconque des revendications 1 à 22 **caractérisé en ce qu'**une forme développée de la console (1, 101) est découpée dans une tôle et ensuite pliée, cette forme étant répétée sous forme de motif périodique dans la tôle.

24. Procédé de réalisation de console selon revendication 23 **caractérisé en ce qu'**une opération d'emboutissage est effectuée entre découpe de la tôle et pliage pour compléter la mise en forme des différentes parties de la console (1, 101).

## Patentansprüche

1. Stütze (1, 101), insbesondere für Trägerkanäle (7, 8, 107, 108), die aus einem umgebogenen Blech besteht, das in einen Halter (2, 102) in Form einer U-formigen Schiene eingesteckt montiert werden soll, deren Flügel (3, 103) und (3', 103') einander gegenüberliegende Bohrungen (4, 104) und (4', 104') aufweisen, und die mit einer Einbauwand (20, 120) versehen ist, **dadurch gekennzeichnet, daß** sie eine einzige Seitenwand (40, 140) und eine Rückwand (50, 150) von solchen Abmessungen aufweist, daß sie sich ins Innere der Schiene einfügen können, wobei die Einbauwand, die Seitenwand und die Rückwand einen Dreiflächler bilden, dessen beide Kanten (21, 121) und (41, 141) aus den Falzen des Blechs bestehen, die den Übergang von einer Wand zur anderen Wand gewährleisten, daß die Rückwand ein zur Innenseite des Dreiflächlers weisendes Relief aufweist, das in der Nähe der Einbauwand und in Abstand zur Seitenwand angeordnet ist, wobei dieses Relief eine Auflage für eine Stange (5, 105) bildet, die ein Mittel zur Montage der Stütze auf die Schiene (2, 102) bildet, und daß die Seitenwand ein Loch (42, 142) aufweist, das für den Durchlaß der Stange (5, 105) geeignet ist, wobei das Loch (42, 142) und das Relief so angeordnet sind, daß die in zwei einander gegenüberliegende Bohrungen (4, 4', 104, 104') der beiden Flügel (3, 3', 103, 103') der Schiene eingesetzte Stange (5, 105) die Rückwand (50, 150) der Stütze innerhalb der Schiene hält.

2. Stütze nach Anspruch 1, **dadurch gekennzeichnet, daß** die Seitenwand (40, 140) die Verbindung zwischen der Einbauwand (20, 120) und der Rückwand (50, 150) herstellt.

3. Stütze nach Anspruch 1 oder 2, **dadurch gekennzeichnet, daß** die an den drei Kanten des Dreiflächlers gebildten Flächenwinkel rechte Winkel sind.

4. Stütze nach einem der Ansprüche 1 bis 3, **dadurch gekennzeichnet, daß** das eine Auflage für eine Stange (5, 105) bildende Relief einen durchgehenden Durchlaß für die Stange aufweist.

5. Stütze nach einem der Ansprüche 1 bis 4, **dadurch gekennzeichnet, daß** das Relief aus der freien Kante (57, 157) einer Lasche (55, 155) besteht, die aus der Rückwand (50, 150) ausgeschnitten und umgeklappt ist, wobei die freie Kante (57, 157) die Auflagezone für die Stange (5, 105) bildet, mit deren Hilfe die Stütze (1, 101) auf die Schiene (2, 102) montiert werden kann.

6. Stütze nach einem der Ansprüche 1 bis 5, **dadurch gekennzeichnet, daß** die Auflagezone des Reliefs (57, 157) eine Nocke bildet, wobei die Höhe des Reliefs in bezug auf die Rückwand (50, 150) sich vergrößert, je weiter man sich der Einbauwand (20, 120) nähert, und daß das an der Seitenwand (40, 140) für den Durchlaß einer Stange (5, 105) angeordnete Loch (42, 142) die Form eines Knopflochs hat, dessen große Achse eine Neigung im wesentlich gleich derjenigen der Nocke hat.

7. Stütze nach einem der Ansprüche 1 bis 6, **dadurch gekennzeichnet, daß** der Rand des Lochs (42) der Seitenwand (40) senkrecht zur Seitenwand in Form eines Kragens (45) umgeschlagen ist.

8. Stütze nach einem der Ansprüche 1 bis 7, **dadurch gekennzeichnet, daß** die Seitenwand (40, 140) mit einem zweiten Loch (46, 146) versehen ist, das sich in der Nähe der Rückwand (50, 150), aber in Abstand zum ersten befindet, um die Montage der Stütze (1, 101) auf der Schiene (2, 102) zu sichern, indem ein Mittel der Art Bolzen (48, 148) durch dieses zweite Loch und eine entsprechende Bohrung (4, 104) des Flügels (3, 103) der Schiene geführt wird, auf dem die Seitenwand aufliegt.

9. Stütze nach einem der Ansprüche 1 bis 8, **dadurch gekennzeichnet, daß** die Rückwand (50, 150) mit mindestens einem Loch (51, 151) versehen ist, das den Durchlaß eines Mittels zur direkten Montage der Stütze an einer Wand, einem Balken oder ähnlichem ermöglicht.

10. Stütze nach einem der Ansprüche 1 bis 9, **dadurch gekennzeichnet, daß** die Breite der Einbauwand (20, 120) geringer ist als die Breite der Rückwand (50, 150).

11. Stütze nach einem der Ansprüche 1 bis 10, **dadurch gekennzeichnet, daß** die Einbauwand (20, 120) mit einem Mittel zur Befestigung der Trägerkanäle (8, 108) aus Drahtgeflecht versehen ist.

12. Stütze nach Anspruch 11, **dadurch gekennzeichnet, daß** die Einbauwand (20) ein System von Kerben (24) aufweist, die überlappend in der Einbauwand und an den Enden der Seitenwand (40) und einer durchgehenden Randleiste (30) der Einbauwand, die auf der der Seitenwand entgegengesetzten Seite ausgebildet ist, ausgeschnitten sind, wobei über den Kerben (24) Zungen (25) angeordnet sind, die in der Einbauwand über einen Teil der Länge der Kerben (24) ausgebildet sind, wobei diese Kerben durch ihre Abmessungen und ihren Wiederholungsabstand P auf der Einbauwand (20) Sitze bilden, um Längsdrähte (9) der Trägerkanäle aus Drahtgeflecht (8) aufzunehmen, wobei die Ränder jeder Kerbe auf der Einbauwand eine Zunge (25) bilden, die auf einen Längsdraht umgebogen werden kann, der in die Kerbe eingeführt ist.

13. Stütze nach Anspruch 11, **dadurch gekennzeichnet, daß** die Einbauwand (120) einen freien Rand auf der der Seitenwand (140) entgegengesetzten Längsseite und ein System von Kerben (124) aufweist, die überlappend in der Einbauwand und auf den Enden der Seitenwand ausgeschnitten sind, wobei über den Kerben (124) Zungen (125) angeordnet sind, die in der Einbauwand über einen Teil der Länge der Kerben (124) ausgebildet sind, wobei diese Kerben durch ihre Abmessungen und ihren Wiederholungsabstand P auf der Einbauwand (120) Sitze bilden, um Längsdrähte (109) von Trägerkanälen aus Drahtgeflecht (108) aufzunehmen, wobei die Ränder jeder Kerbe auf der Einbauwand eine Zunge (125) bilden, die auf einen Längsdraht umgebogen werden kann, der in die Kerbe eingeführt ist.

14. Stütze nach Anspruch 13, **dadurch gekennzeichnet, daß** eine Randleiste (126) sehr geringer Höhe auf den Inseln (122) der Einbauwand (120) entlang ihres freien Rands entgegengesetzt zur Seitenwand (140) ausgebildet ist.

15. Stütze nach einem der Ansprüche 12 bis 14, **dadurch gekennzeichnet, daß** der Rand jeder Kerbe (124), der eine Zunge (125) bildet, über eine bestimmte Länge eine Breite aufweist, die geringer ist als diejenige der Einbauwand (120).

16. Stütze nach Anspruch 15, **dadurch gekennzeichnet, daß** der Rand jeder Kerbe (124) auf der Einbauwand, der eine Zunge (125) bildet, sich in der Nähe der Seitenwand (140) befindet.

17. Stütze nach einem der Ansprüche 1 bis 16, **dadurch gekennzeichnet, daß** die Einbauwand (20, 120) mit einem Mittel zur Befestigung von anderen Trägerkanälen (7, 107) als denen aus Drahtgeflecht oder zur Befestigung anderer Zubehörteile versehen ist.

18. Stütze nach Anspruch 17, **dadurch gekennzeichnet, daß** das Befestigungsmittel aus mindestens einer Bohrung (23, 123) besteht.

19. Stütze nach einem der Ansprüche 1 bis 18, **dadurch gekennzeichnet, daß** der Teil (128) der Einbauwand (120) neben der Rückwand (150) durch eine Lasche (130) verlängert wird, die gegen die Außenfläche der Rückwand umgeklappt ist.

20. Stütze nach Anspruch 19, **dadurch gekennzeichnet, daß** der Teil (153) der Rückwand (150) neben der Einbauwand (120), der mit der Lasche (130) in Kontakt gelangt, zum Inneren der Stütze hin über eine Tiefe gleich der Dicke des Blechs leicht eingedrückt ist, damit die Lasche, wenn sie umgeklappt ist, keine Überdicke in bezug auf die Rückwand (150) bildet.

21. Stütze nach einem der Ansprüche 1 bis 20, **dadurch gekennzeichnet, daß** mindestens entweder die Seitenwand (40, 140) oder die Rückwand (50, 150) durch ein geeignetes Mittel versteift wird, wie zum Beispiel eine hohl eingedrückte Rippe (44, 144) oder ein gleichwertiges Mittel.

22. Stütze nach einem der Ansprüche 1 bis 21, **dadurch gekennzeichnet, daß** der Flächenwinkel zwischen der Seitenwand (40, 140) und der Rückwand (50, 150) durch ein geeignetes Mittel versteift wird, zum Beispiel mindestens ein Stulpblech (43), das überlappend auf der Kante (41, 141) des Zweiflächlers angeordnet ist, oder ein gleichwertiges Mittel.

23. Verfahren zur Herstellung einer Stütze nach einem der Ansprüche 1 bis 22, **dadurch gekennzeichnet, daß** eine entwickelte Form der Stütze (1, 101) aus einem Blech ausgeschnitten und dann umgebogen wird, wobei diese Form in Form eines periodischen Musters im Blech wiederholt wird.

24. Verfahren zur Herstellung einer Stütze nach Anspruch 23, **dadurch gekennzeichnet, daß** zwischen dem Ausschneiden des Blechs und dem Umbiegen ein Prägevorgang durchgeführt wird, um die Formgebung der verschiedenen Teile der Stütze (1, 101) zu vervollständigen.

## Claims

1. A bracket (1, 101) particularly for conduit carriers (7, 8, 107, 108) constituted by bent sheet metal, intended to be embedded in a U-shaped rail type upright (2, 102) the side members (3, 103) and (3', 103') of which have facing perforations (4, 104) and (4', 104'), the bracket being provided with a fixing wall (20, 120), **characterized in that** it comprises a single lateral wall (40, 140) and a dorsal wall (50, 150) with dimensions such that it can engage inside the rail, the fixing wall, lateral wall and dorsal wall forming a trihedron two edges of which (21, 121) and (41, 141) are constituted by bends in the sheet metal ensuring passage from one wall to another wall, **in that** the dorsal wall comprises a projection towards the inside of the trihedron, the projection being located close to the fixing wall and distanced from the lateral wall, said projection constituting a rest for a rod (5, 105) forming a means for mounting the bracket on the rail (2, 102), and **in that** the lateral wall comprises a hole (42, 142) through which said rod (5, 105) can pass, the hole (42, 142) and the projection being disposed so that said rod (5, 105), engaged in two facing perforations (4, 4', 104, 104') in the two side members (3, 3', 103, 103') of the rail, maintains the dorsal wall (50, 150) of the bracket inside the rail.

2. A bracket according to claim 1, **characterized in that** the lateral wall (40, 140) forms the connection between the fixing wall (20, 120) and the dorsal wall (50, 150).

3. A bracket according to claim 1 or claim 2, **characterized in that** the dihedral angles formed at the three edges of the trihedron are right angles.

4. A bracket according to any one of claims 1 to 3, **characterized in that** the projection constituting the rest for the rod (5, 105) comprises a through passage for said rod.

5. A bracket according to any one of claims 1 to 4, **characterized in that** said projection is constituted by the free edge (57, 157) of a tab (55, 155) cut in the dorsal wall (50, 150) and bent, the free edge (57, 157) forming a bearing zone for the rod (5, 105) for mounting the bracket (1, 101), on the rail (2, 102).

6. A bracket according to any one of claims 1 to 5, **characterized in that** the bearing zone of the projection (57, 157) constitutes a cam, the height of the projection with respect to the dorsal wall (50, 150) increasing as the fixing wall (20, 120) is approached and **in that** the hole (42, 142) located on the lateral wall (40, 140) for passage of a rod (5, 105) is oblong in shape, the inclination of the long axis of which is substantially identical to that of the cam.

7. A bracket according to any one of claims 1 to 6, **characterized in that** the edge of the hole (42) in the lateral wall (40) is bent in the form of a collar (45) perpendicular to the lateral wall.

8. A bracket according to any one of claims 1 to 7, **characterized in that** the lateral wall (40, 140) is provided with a second hole (46, 146) located close to the dorsal wall (50, 150) but at a distance from the first to secure mounting of the bracket (1, 101) on the rail (2, 102) by passing a bolt type means (48, 148) through the second hole and through a corresponding perforation (4, 104) in the side member (3, 103) of the rail on which the lateral wall bears.

9. A bracket according to any one of claims 1 to 8, **characterized in that** the dorsal wall (50, 150) is provided with at least one hole (51, 151) enabling a mounting means to be passed directly from the bracket to the wall, a beam or the like.

10. A bracket according to any one of claims 1 to 9, **characterized in that** the fixing wall (20, 120) is narrower than the dorsal wall (50, 150).

11. A bracket according to any one of claims 1 to 10, **characterized in that** the fixing wall (20, 120) is provided with a means for fixing wire mesh conduit carriers (8, 108).

12. A bracket according to claim 11, **characterized in that** the fixing wall (20) comprises a system of notches (24) cut across the fixing wall and into the extremities of the lateral wall (40) and a continuous flange (30) of the fixing wall formed on the opposite side to the lateral wall, said notches (24) being surmounted by tongues (25) formed in the fixing wall over a fraction of the length of the notches (24), the dimensions and spacing P of said notches on said fixing wall (20) being such that they constitute housings to receive longitudinal wires (9) of wire mesh conduit carriers (8), the edges of each notch on the fixing wall constituting a tongue (25) which can be bent down onto a longitudinal wire engaged in said notch.

13. A bracket according to claim 11, **characterized in that** the fixing wall (120) comprises a free edge on the longitudinal side opposite to the lateral wall (140) and a system of notches (124) is cut across the fixing wall and into the extremities of the lateral wall, said notches (124) being surmounted by tongues (125) formed in the fixing wall over a fraction of the length of the notches (124), the dimensions and spacing P of said notches on said fixing wall (120) being such that they constitute housings to receive longitudinal wires (109) of wire mesh conduit carriers (108), the edges of each notch on the fixing wall constituting a tongue (125) which can be bent down onto a longitudinal wire engaged in said notch.

14. A bracket according to claim 13, **characterized in that** a very narrow bead (126) is formed on islets (122) in the fixing wall (120) along their free edge opposite the lateral wall (140).

15. A bracket according to any one of claims 12 to 14, **characterized in that** over a certain length, the edge of each notch (124) forming a tongue (125) has a width which is less than that of the fixing wall (120).

16. A bracket according to claim 15, **characterized in that** the edge of each notch (124) on the fixing wall forming a tongue (125) is located close to the lateral wall (140).

17. A bracket according to any one of claims 1 to 16, **characterized in that** the fixing wall (20, 120) is provided with a means for fixing conduit carriers (7, 107) other than wire mesh conduit carriers or for fixing other accessories.

18. A bracket according to claim 17, **characterized in that** the fixing means consists of at least one perforation (23, 123).

19. A bracket according to any one of claims 1 to 18, **characterized in that** the portion (128) of the fixing wall (120) close to the dorsal wall (150) is extended by a tab (130) bent against the outer face of said dorsal wall.

20. A bracket according to claim 19, **characterized in that** the portion (153) of the dorsal wall (150) close to the fixing wall (120) and coming into contact with the tab (130) is slightly indented towards the interior of the bracket to a depth equal to the thickness of the sheet metal such that said tab, once bent, does not make the dorsal wall (150) excessively thick.

21. A bracket according to any one of claims 1 to 20, **characterized in that** at least the lateral wall (40, 140) or the dorsal wall (50, 150) is stiffened by an appropriate means such as at least one hollow embossed rib (44, 144) or an equivalent means.

22. A bracket according to any one of claims 1 to 21, **characterized in that** the dihedral angle between the lateral wall (40, 140) and the dorsal wall (50, 150) is stiffened by an appropriate means such as at least one boss (43) across the edge (41, 141) of said dihedron or an equivalent means.

23. A method of manufacturing a bracket according to any one of claims 1 to 22, **characterized in that** a developed shape for the bracket (1, 101) is cut from sheet metal then bent, this shape being repeated in the form of a periodic pattern in the sheet metal.

24. A method of manufacturing a bracket according to claim 23, **characterized in that** an embossing operation is carried out between cutting out the sheet metal and bending to complete the forming of the different portions of the bracket (1, 101).
